# FASCICULE DE BREVET EUROPEEN

(11) **EP 3 721 105 B1**
(45) Date de publication et mention de la délivrance du brevet: **14.07.2021**
(21) Numéro de dépôt: 18819545.7
(22) Date de dépôt: 27.11.2018
(51) Int. Cl.: F16C 19/36, F16C 33/30, F16C 33/58, F16C 33/36

(54) **ROULEMENT A ROULEAUX EN CHEVRONS**
LAGER MIT ZICKZACKROLLEN
BEARING HAVING CHEVRON ROLLERS

(30) Priorité: 04.12.2017 FR 1761592
(43) Date de publication de la demande: 14.10.2020
(73) Titulaire: Dubus, Jérôme, 73100 Aix les Bains (FR)
(72) Inventeur: Dubus, Jérôme, 73100 Aix les Bains (FR)
(74) Mandataire: Prugneau, Philippe
(86) Numéro de dépôt international: PCT/FR2018/053013
(87) Numéro de publication internationale: WO 2019/110891

(56) Documents cités:
- WO-A1-82/03435
- FR-A- 888 281
- FR-A1- 3 031 554
- FR-B1- 2 999 674

## Description

### Domaine technique

L'invention concerne le domaine des roulements, mécanismes supportant et guidant un assemblage en rotation.

### Technique antérieure

Les roulements classiques comprennent les roulements à billes, à rouleaux coniques, ou encore à rouleaux cylindriques, et sont les plus utilisés en raison de leur faible coût, avec l'inconvénient d'être encombrants, surtout lorsque dimensionnés pour supporter de fortes charges.

Il existe des roulements basés sur des systèmes de rouleaux à filets ou à gorges, plus coûteux que les roulements classiques, mais à plus forte capacité de charge et/ou encombrement plus faible et ayant de meilleurs performances générales.

Le document de brevet FR 3 031 554 décrit un roulement appartenant à cette catégorie, comprenant une bague extérieure, une bague intérieure et des rouleaux interposés entre les deux bagues ; les rouleaux et au moins l'une des bagues comportent au moins une partie filetée chacun, la partie filetée des rouleaux s'engrenant dans la partie filetée de ladite bague et les filets étant tels que la bague extérieure et la bague intérieure ne se déplacent pas axialement lors d'une rotation relative, formant ainsi une vis à rouleaux à pas zéro.

Dans ce roulement, les rouleaux et au moins l'une des bagues comportent en outre une partie à gorges circulaires chacun, la partie à gorges des rouleaux étant en prise avec la partie à gorges de ladite bague.

Le roulement du brevet FR 3 031 554 combine ainsi la structure du roulement utilisant un système de rouleaux à gorges circulaires décrit dans le brevet US 9,435,377 avec la structure du roulement utilisant un système de rouleaux à filets décrit dans la demande de brevet FR 2 999 674, évitant ainsi les risques de glissement axial inhérents aux systèmes à gorges circulaires sans pour autant nécessiter de dentures de synchronisation des rouleaux, source d'inconvénients des systèmes à filets.

La demande internationale de brevet PCT/CH81/00036 (publication internationale WO 82/03435 A1) a pour objet un réducteur de vitesse fonctionnant comme un dispositif de vis sans fin avec une roue tangente formée par un arbre et des rouleaux filetés dans un boîtier, et divulgue un mécanisme de roulement selon le préambule de la revendication 1.

### Exposé de l'invention

Les avantages du roulement du brevet FR 3 031 554 sont obtenus au prix d'une sophistication accrue tant pour sa conception que pour sa mise en œuvre : son design, sa fabrication et son assemblage dépendent simultanément des caractéristiques des gorges circulaires et des caractéristiques des filets, ce qui en fait une solution techniquement difficile à exploiter.

Le but de l'invention est de proposer un roulement à rouleaux pouvant être utilisé comme butée au sens d'un roulement axial, ou palier, et formant une solution technique alternative aux roulements existants, d'excellente capacité de charge à encombrement donné, plus fiable, plus simple et plus facile à fabriquer et à assembler, tout en étant moins coûteux.

A cet effet, l'invention a pour objet un mécanisme de roulement comprenant une tige, une bague extérieure entourant coaxialement la tige et des rouleaux d'axes longitudinaux parallèles aux axes longitudinaux de la tige et de la bague extérieure, chaque rouleau étant interposé entre la tige et la bague extérieure de sorte que des filets des rouleaux s'engrènent dans un filet de la tige et un filet de la bague extérieure, mécanisme dans lequel la tige, la bague extérieure et les rouleaux comprennent chacun un filet présentant un pas à droite et un filet présentant un pas à gauche, le filet à pas à droite de la tige étant situé dans une première section axiale du mécanisme et le filet à pas à gauche de la tige étant situé dans une seconde section axiale du mécanisme, la seconde section axiale étant axialement distante de la première section axiale, dans la première section axiale, les filets à pas à gauche des rouleaux s'engrenant dans le filet à pas à droite de la tige et dans le filet à pas à gauche de la bague extérieure, et, dans la seconde section axiale, les filets à pas à droite des rouleaux s'engrenant dans le filet à pas à gauche de la tige et dans le filet à pas à droite de la bague extérieure.

Dans ce mécanisme, plus simple à adapter à différentes applications et à fabriquer que les solutions techniques comparables existantes, les filets présentent des pas antagonistes grâce auxquels ils ont une action auto-compensatrice empêchant le glissement axial des rouleaux et amenant une excellente stabilité de ces derniers en charge, y compris à haute vitesse de rotation ; ainsi les filets assurent par eux-mêmes à la fois la fonction de transmission de charge et la fonction de synchronisation des rouleaux, et permettent d'obtenir un système à haute capacité de charge et presque sans glissement à longue durée de vie.

L'assemblage de ce mécanisme est également avantageuse, puisque, ne comprenant ni gorges ni dentures, il peut être très aisément assemblé par vissage.

Le mécanisme de roulement selon l'invention peut avantageusement présenter les caractéristiques suivantes :
- le filet à pas à droite de la tige, les filets à pas à gauche des rouleaux et le filet à pas à gauche de la bague extérieure peuvent présenter des angles d'hélice égaux ou sensiblement égaux entre eux ; et le filet à pas à gauche de la tige, les filets à pas à droite des rouleaux et le filet à pas à droite de la bague extérieure peuvent présenter des angles d'hélice égaux ou sensiblement égaux entre eux, de manière à constituer une vis différentielle à pas zéro ;
- le filet à pas à droite de la tige, les filets à pas à gauche des rouleaux et le filet à pas à gauche de la bague extérieure peuvent avoir un premier nombre de multiplicité, et le filet à pas à gauche de la tige, les filets à pas à droite des rouleaux et le filet à pas à droite de la bague extérieure peuvent avoir un second nombre de multiplicité qui peut être différent du premier nombre de multiplicité, de sorte que le mécanisme de roulement peut présenter des capacités de charge différenciées entre deux directions de chargement axial du mécanisme ;
- la tige peut comprendre le filet à pas à droite sur une première longueur axiale le long de la tige, les rouleaux peuvent comprendre les filets à pas à gauche sur la première longueur le long des rouleaux, et la bague extérieure peut comprendre le filet à pas à gauche sur la première longueur le long de la bague extérieure ; et la tige peut comprendre le filet à pas à gauche sur une seconde longueur axiale le long de la tige, les rouleaux peuvent comprendre les filets à pas à droite sur la seconde longueur le long des rouleaux, et la bague extérieure peut comprendre le filet à pas à droite sur la seconde longueur le long de la bague extérieure ; la seconde longueur axiale pouvant être différente de la première longueur axiale, de sorte que le mécanisme de roulement peut présenter des capacités de charge différenciées entre deux directions de chargement axial du mécanisme ;

- les rouleaux et la tige peuvent être monoblocs ;
- la bague extérieure peut être constituée de deux parties, l'une comprenant le filet à pas à gauche et l'autre comprenant le filet à pas à droite ; et
- les rouleaux peuvent être creux.

L'invention peut s'étendre à un dispositif de vérin mécanique pour déplacement linéaire par vis d'entraînement comprenant le mécanisme de roulement selon l'invention et une vis d'entraînement, tous deux montés suivant un axe commun au mécanisme de roulement et à la vis d'entraînement, le mécanisme de roulement étant configuré de manière à former un palier de guidage de l'axe commun.

Le dispositif de vérin mécanique selon l'invention peut avantageusement présenter les caractéristiques suivantes :
- le dispositif de vérin mécanique peut comprendre une autre tige sur laquelle est montée ladite vis d'entraînement, le mécanisme de roulement selon l'invention pouvant être monté sur ladite autre tige, ladite autre tige constituant ledit axe commun et faisant partie intégrante de la vis d'entraînement; et
- la vis d'entraînement peut être montée directement sur la tige du mécanisme de roulement selon l'invention, ladite tige constituant ledit axe commun et faisant partie intégrante de la vis d'entraînement.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A représente un éclaté d'un mécanisme de roulement selon l'invention et la figure 1B le même mécanisme après assemblage ;
- les figures 2A, 2B et 2C représentent, respectivement, une tige, un rouleau et une bague extérieure du mécanisme de la figure 1A ;
- les figures 3A et 3B indiquent le positionnement de rouleaux par rapport à, respectivement, la tige et la bague extérieure dans le mécanisme de roulement assemblé de la figure 1B ;
- les figures 4A, 4B et 4C illustrent, respectivement, un rouleau, une tige et une bague extérieure chacun munis de filets ayant des nombres de multiplicité différents ;
- les figures 5A et 5B représentent, respectivement, un assemblage vu en coupe et en perspective de rouleaux et de la tige des figures 4A et 4B ;
- la figure 6 illustre un rouleau creux ;
- la figure 7 illustre un premier dispositif incorporant le mécanisme de roulement de la figure 1A ; et
- la figure 8 illustre un second dispositif incorporant le mécanisme de roulement de la figure 1A.

### Description d'un mode de réalisation

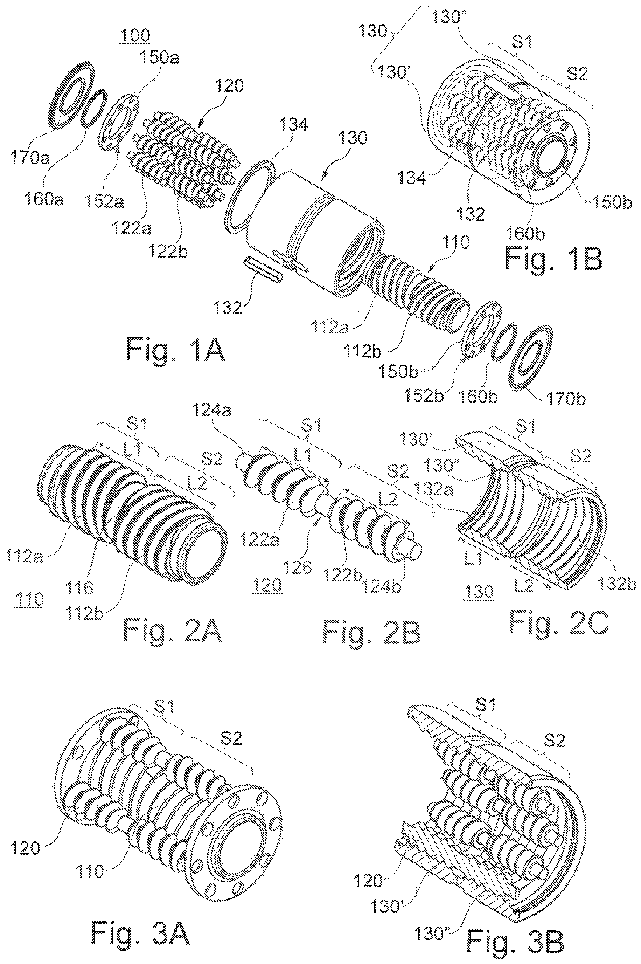

Un mécanisme de roulement selon l'invention est illustré par les figures 1A et 1B, 2A à 2C, 3A et 3B, 4A à 4C, 5A et 5B, 6, 7 et 8.

La figure 1A représente un mécanisme de roulement particulier, pris comme exemple pour illustrer les principaux éléments constituant un mécanisme de roulement selon l'invention.

Il doit être entendu que ni l'invention ni le présent mode de réalisation ne se limitent à ce cas particulier.

Comme illustré par la figure 1A, un mécanisme de roulement 100 peut comprendre une tige 110, une bague extérieure 130 disposée autour de la tige, entourant coaxialement celle-ci, et une pluralité de rouleaux 120 interposés entre la tige et la bague extérieure et dont les axes longitudinaux sont parallèles à ceux des bagues.

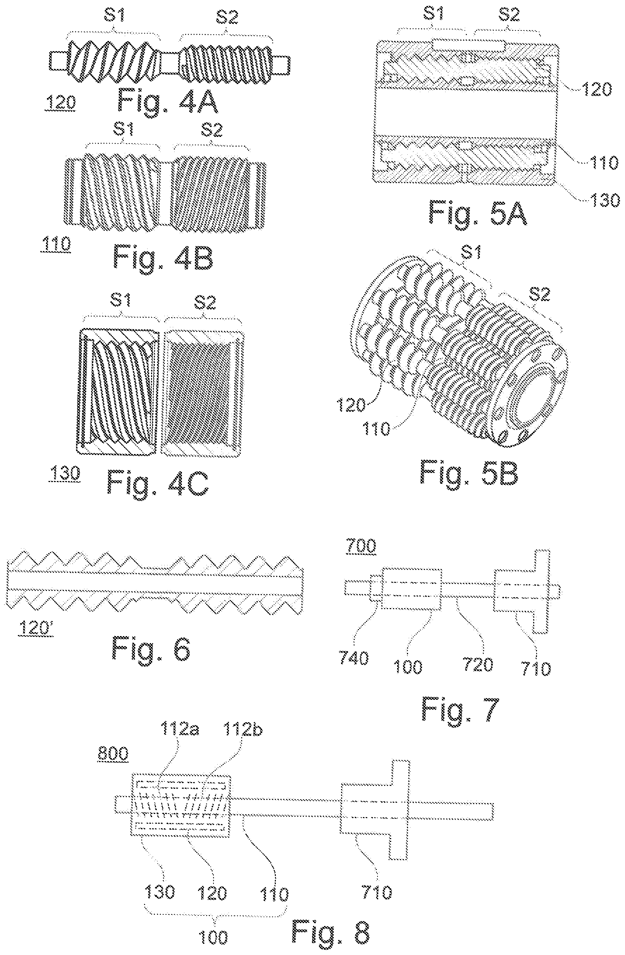

La tige 110 peut être pleine ou creuse, dans ce dernier cas, elle peut également être appelée « bague intérieure » ; la tige 110 peut s'étendre longitudinalement de part et d'autre de la bague extérieure 130, par exemple comme dans le cas du dispositif illustré par la figure 8.

Comme détaillé dans les figures 2A, 2B et 2C, la tige 110 et les rouleaux 120 sont munis de filets extérieurs, et la bague extérieure 130 de filets intérieurs, les filets faisant plusieurs révolutions autour de leurs axes respectifs et étant configurés de sorte que, dans un roulement assemblé tel que montré par la figure 1B, les filets des rouleaux sont en prise avec les filets de la tige et les filets de la bague extérieure, comme illustré par les figures 3A et 3B, respectivement.

Selon le principe de l'invention, la tige, les rouleaux et la bague extérieure comprennent des premiers filets 112a, 122a et 132a, respectivement, conçus pour être situés dans une première section axiale SI du roulement assemblé, et des seconds filets 112b, 122b et 132b, respectivement, conçus pour être situés dans une seconde section axiale S2 du roulement assemblé, comme illustré par les figures 1B, 2A, 2B et 2C, les seconds filets 112b, 122b et 132b ayant des orientations opposées respectivement à celles des premiers filets 112a, 122a et 132a.

Le premier filet 112a de la tige 110 a une première orientation, par exemple à pas à droite, le second filet 112b de la tige 110 a une seconde orientation opposée à la première orientation, ici à pas à gauche ; les premiers filets 122a des rouleaux 120 et le premier filet 132a de la tige 130 ont la seconde orientation, ici à pas à gauche, et les seconds filets 122b des rouleaux 120 et le second filet 132b de la bague extérieure 130 ont la première orientation, ici à pas à droite, formant ainsi une structure comprenant des sections à pas antagonistes et pouvant être décrite individuellement pour chacun des rouleaux, de la tige et de la bague extérieure comme « en chevrons ».

Les filets de la section axiale SI sont formés sur une première longueur axiale L1 le long de la tige, des rouleaux et de la bague extérieure ; et les filets de la section axiale S2 sont formés sur une seconde longueur axiale L2 le long de la tige, des rouleaux et de la bague extérieure, comme indiqué sur les figures 2A, 2B et 2C, respectivement ; la première longueur axiale L1 peut être égale à ou différente de la seconde longueur axiale L2.

Dans un roulement assemblé, les premiers filets 122a des rouleaux 120 s'engrènent dans le premier filet 112a de la tige 110 et dans le premier filet 132a de la bague extérieure 130 et les seconds filets 122b des rouleaux 120 s'engrènent dans le second filet 112b de la tige 110 et dans le second filet 132b de la bague extérieure 130, comme illustré par les figures 3A et 3B, de sorte que les filets 122a à pas à gauche des rouleaux s'engrènent dans le filet 112a à pas à droite de la tige et dans le filet 132a à pas à gauche de la bague extérieure et de sorte que les filets 122b à pas à droite des rouleaux s'engrènent dans le filet 112b à pas à gauche de la tige et dans le filet 132b à pas à droite de la bague extérieure.

De plus, les premiers filets des rouleaux, de la tige et de la bague extérieure présentent des angles d'hélice égaux ou sensiblement égaux entre eux, et les seconds filets des rouleaux, de la tige et de la bague extérieure présentent des angles d'hélice égaux ou sensiblement égaux entre eux, de sorte que les filets à pas à droite des rouleaux et de la bague extérieure et le filet à pas à gauche de la tige présentent des angles d'hélice égaux ou sensiblement égaux entre eux et les filets à pas à gauche des rouleaux et de la bague extérieure et le filet à pas à droite de la tige présentent des angles d'hélice égaux ou sensiblement égaux entre eux.

Une conséquence directe de cet agencement du mécanisme de roulement, avec des angles d'hélices égaux ou sensiblement égaux pour des filets en prises les uns avec les autres, est que, lorsque la tige est mise en rotation par rapport à la bague extérieure, les rouleaux sont axialement fixes par rapport à la tige et à la bague extérieure, ce qui fait de ce roulement un type de vis à rouleaux différentielle à pas résultant nul.

Du fait d'erreurs lors de la fabrication et/ou de déformations des composants, il reste toujours une certaine marge d'imprécision dans leurs dimensions, comme par exemple dans les diamètres primitifs des rouleaux.

Dès lors, en pratique, les angles d'hélices de deux filets ne peuvent être rigoureusement égaux entre eux, ce qui, dans des dispositifs similaires tels des vis à rouleaux différentielles à pas zéro, se traduit par une tendance naturelle à un glissement unidirectionnel des rouleaux qui doit être contrecarrée par des mécanismes de maintien comme des dentures.

Cependant, dans le mécanisme de roulement selon l'invention, la tige, les rouleaux et la bague extérieure comprennent des filets antagonistes ; si, par exemple, un glissement dû à des imprécisions dans les filets situés dans la première section SI du mécanisme tend à se produire dans un sens donné, ce glissement est automatiquement et immédiatement stoppé par une action compensatrice imposée par un glissement opposé et/ou une action de butée dus aux filets antagonistes situés dans la seconde section S2, et inversement.

Grâce à cette action compensatrice des filets antagonistes, le mécanisme de roulement à filets selon l'invention ne nécessite pas de dentures ou système équivalent de synchronisation.

Une analyse superficielle pourrait amener à penser que ce mécanisme de compensation résulterait éventuellement en une tension axiale sur les rouleaux qui pourrait à la longue finir par les déformer et/ou les rompre.

En réalité, le système est utilisé sous une charge unidirectionnelle qui maintient les rouleaux globalement dans un état de compression permanent, état de compression que la tension résiduelle induite par le glissement n'est pas en mesure de modifier et qui prévient donc le phénomène de tension axiale mentionné ci-dessus.

Tous les filets, les filets à pas à droite et les filets à pas à gauches, peuvent présenter sensiblement un même angle d'hélice et/ou être formé sur une même longueur axiale.

Alternativement, les filets de la tige, des rouleaux et de la bague extérieure situés dans la première section SI peuvent présenter un premier angle d'hélice et/ou la première section SI peut présenter une première longueur axiale L1 sur laquelle les filetages sont formés, et les filets de la tige, des rouleaux et de la bague extérieure situés dans la seconde section S2 peuvent présenter un second angle d'hélice et/ou la seconde section S2 peut présenter une seconde longueur axiale L2 sur laquelle les filetages sont formés, respectivement différents du premier angle d'hélice et de la première longueur axiale.

Cette dernière configuration peut être envisagée par exemple pour compenser un différentiel de glissement consécutif aux efforts appliqués sur le mécanisme de roulement.

Les profils des filets des rouleaux peuvent être concaves pour des profils des filets de la tige et de la bague extérieure convexes, ou convexes pour des profils des filets de la tige et de la bague extérieure concaves, ou tous les filets peuvent avoir des profils trapézoïdaux.

Il est également possible d'appliquer aux filets du mécanisme de roulement une géométrie à contacts curvilignes, grâce à laquelle les zones de contacts entre des filets en prise ne se définissent pas par des points de contact mais par des lignes de contacts, ce qui permet des capacités de charge et/ou des durées de vie accrues.

Les filets, notamment ceux des rouleaux, ne sont pas limités à des filets simples et peuvent être des filets multiples, tels que par exemple des filets doubles ou quadruples caractérisés par des nombres de multiplicité de deux et quatre, respectivement.

Le nombre de points de contacts, ou la surface totale de contact, entre les rouleaux et chacune de la tige et la bague extérieure augmente en proportion des nombres de multiplicité des filets, ce qui augmente parallèlement la capacité de roulement du mécanisme.

Il est possible de faire varier les nombres de multiplicité des filets indépendamment dans chacune des sections S1 et S2, par exemple à pas d'hélice et/ou longueur constants.

Ainsi, les figures 4A, 4B et 4C illustrent un rouleau, une tige et une bague extérieure comprenant des filets ayant des nombres de multiplicité dans leur section S2 double des nombres de multiplicité des filets dans leur section S1, respectivement.

Dans une section SI ou S2 donnée, les filets des rouleaux doivent bien entendu correspondre à ceux de la tige et de la bague extérieure afin de s'engrener correctement, en prenant en compte les pas d'hélice, les hauteurs et profils de crêtes et les nombres de multiplicité de ces filets, comme illustrée dans la coupe axiale 5A d'un mécanisme de rouleaux assemblé et la vue en perspective 5B montrant l'engrènement des filets des rouleaux dans ceux de la tige, avec des multiplicités de filets différentes dans les sections SI et S2.

En modifiant les pas d'hélices, les longueurs axiales sur lesquelles sont formés les filets, les profils et/ou les nombres de multiplicité des filets, le nombre de points de contacts, ou la surface totale de contact, entre les rouleaux et chacune de la tige et la bague extérieure peut être modulé, indépendamment dans chacune des sections S1 et S2 du mécanisme de roulement, ce qui permet de faire varier la capacité du mécanisme de roulement entre les deux directions de chargement axial du mécanisme.

Indépendamment des avantages opérationnels du mécanisme de roulement selon l'invention (compacité, poids, forte capacité de charge, durabilité ou encore stabilité y compris à hautes vitesses de rotation), la structure du mécanisme le rend aisé à adapter à des applications diverses, par exemple en ajustant les angles d'hélice, le nombre de rouleaux, les multiplicités et les profils des filets ou encore les longueurs axiales sur lesquelles ces derniers sont formés.

L'assemblage de ce nouveau mécanisme est également extrêmement avantageux, puisque la tige, la bague extérieure et les rouleaux peuvent être simplement positionnés et vissés, à la différence des mécanismes basés sur des rouleaux à filets qui ne peuvent pas être seulement vissés en raison de la présence d'engrenage comme les dentures, et à la différence des mécanismes basés sur des rouleaux à gorges qui nécessitent de déformer les pièces à ajuster pour les engager les unes dans les autres.

Un agencement préférable du mécanisme est de comprendre des rouleaux 120 et une tige 110 monoblocs et une bague extérieure 130 constituée de deux parties 130' et 130" correspondant à la première section axiale SI et à la seconde section axiale S2 du roulement, respectivement, comme indiqué sur les figure 1B et 2C.

Alternativement à l'utilisation de rouleaux et/ou d'une tige monoblocs, il est également possible de fabriquer puis d'assembler des rouleaux et une tige en deux parties.

Les deux parties de la bague extérieure 130' et 130" peuvent être liées en rotation par une clavette 132 et séparées par une cale 134 monobloc ou en plusieurs parties, pouvant servir à appliquer une précharge axiale.

La tige peut comprendre une gorge de dégagement 116 et chacun des rouleaux une gorge de dégagement 126, ces gorges étant chacune constituées d'une portion substantiellement cylindrique séparant les premiers filets des seconds filets pour faciliter le dégagement d'un outil utilisé pour leur fabrication tel une meule.

De cette manière, les premiers filets de la tige et des rouleaux sont axialement distants des seconds filets de la tige et des rouleaux, respectivement, des parties essentiellement cylindriques s'étendant de ces premiers filets à ces second filets, respectivement, et la première section axiale SI du roulement étant axialement distante de la seconde section axiale S2 du roulement.

La tige 110, les rouleaux 120 et la bague extérieure 130 peuvent être fabriqués par des techniques comme le tourbillonnage, la rectification, le tournage dur et le galetage ; la tige et les rouleaux peuvent être fabriqués par roulage ; la bague extérieure peut être fabriquée par taraudage.

En sus des éléments listés et détaillés ci-dessus, le roulement illustré par la figure 1A comprend un dispositif de maintien des rouleaux comprenant des guides annulaires 150a et 150b montés entre la tige et la bague extérieure et comprenant des évidements cylindriques 152a et 152b dans lesquels sont logés des tourillons 124a et 124b prolongeant les extrémités des rouleaux correspondants ; des joncs 160a et 160b montés chacun dans une gorge correspondante agencée dans la bague extérieure de sorte à maintenir les guides annulaires ; et des joints d'étanchéité 170a et 170b pour éviter la contamination et retenir du lubrifiant.

Les évidements 152a et 152b des guides annulaires pour l'accueil des tourillons des rouleaux sont ici représentés débouchants, mais ils pourraient également être des trous fraisés non débouchants de manière à améliorer l'étanchéité du roulement pour, par exemple, conserver du lubrifiant à l'intérieur de celui-ci.

Deux guides annulaires 150a et 150b sont représentés ici, monoblocs et situés à deux extrémités opposées du roulement 100, mais il est également possible de n'utiliser qu'un seul guide annulaire, composé d'au moins deux parties et situé au milieu du roulement, par exemple au niveau de la gorge de dégagement 126.

Dans le cas où un seul guide annulaire est utilisé, les évidements peuvent être débouchants si des rouleaux monoblocs sont utilisés, et non débouchants si des rouleaux en plusieurs parties sont utilisés, un système de solidarisation des rouleaux en rotation et axialement devant être employé dans ce dernier cas.

Alternativement, il est possible de réaliser un mécanisme de roulement selon l'invention ne comportant pas de guide pour les rouleaux.

Il est à noter que bien qu'un mécanisme comprenant des rouleaux 120 pleins munis de tourillons 124a et 124b ont été décrits jusqu'ici, il est également possible d'utiliser des rouleaux creux 120' à section annulaire tel que celui dont une vue en coupe est illustrée par la figure 6, par exemple pour un gain de poids ; les guides annulaires doivent alors être adaptés à la géométrie des rouleaux, par exemple en remplaçant les évidements 152a et 152b par des tourillons conçus pour s'engager axialement dans les rouleaux.

En raison de sa forte capacité de charge, le mécanisme de roulement selon l'invention se prête particulièrement bien à être utilisé en combinaison avec des vis elles-mêmes à fortes capacités de charges, telles des vis à billes ou des vis à rouleaux.

Ainsi, un dispositif de vérin mécanique peut comprendre le mécanisme de roulement selon l'invention et une vis d'entraînement tous deux montés suivant un axe commun au mécanisme de roulement et à la vis d'entraînement, le mécanisme de roulement étant configuré de manière à former une butée au sens d'un roulement axial, limitant le déplacement de la vis d'entraînement, l'axe commun étant guidé en rotation par le mécanisme de roulement.

Par exemple, la figure 7 illustre un dispositif 700 de vérin mécanique pour déplacement linéaire par vis d'entraînement comprenant une vis d'entraînement 710 montée sur une autre tige 720 constituant l'axe commun et sur laquelle est en outre monté un mécanisme de roulement 100 selon l'invention, dont la tige 110 est creuse, enfilée sur l'autre tige 720 et fixée sur celle-ci par un élément de fixation 740.

La vis 710 peut être une vis à rouleaux et la tige 720 peut être une tige complètement ou partiellement filetée faisant partie intégrante de la vis d'entraînement.

Alternativement, la vis 710 peut être une vis à billes et la tige 720 peut être une tige complètement ou partiellement filetée ou un arbre cannelé.

Dans un tel dispositif de vérin, le mécanisme de roulement selon l'invention peut être utilisé comme palier à haute capacité.

Un exemple alternatif à celui de la figure 7 est celui de la figure 8, qui illustre un dispositif 800 ayant un plus haut niveau d'intégration que le dispositif 700.

Comme le dispositif 700, le dispositif 800 comprend une vis d'entraînement 710 et un roulement 100 selon l'invention montés coaxialement, mais la tige 110 du roulement s'étend longitudinalement hors du roulement et joue le rôle de l'axe commun, et la vis 710 est directement montée sur cette tige 110, qui peut faire partie intégrante de la vis d'entraînement 710.

En dehors des sections accueillant les rouleaux 120 et la bague extérieure 130 du mécanisme de roulement 100, la tige 110 peut être partiellement ou totalement filetée ou avoir une section en arbre cannelé.

## Revendications

1. Mécanisme de roulement comprenant :
- une tige (110);
- une bague extérieure (130) entourant coaxialement la tige (110); et
- des rouleaux (120) d'axes longitudinaux parallèles aux axes longitudinaux de la tige et de la bague extérieure, chaque rouleau (120) étant interposé entre la tige (110) et la bague extérieure (130) de sorte que des filets des rouleaux s'engrènent dans un filet de la tige et un filet de la bague extérieure, la tige, la bague extérieure et les rouleaux comprenant chacun un filet présentant un pas à droite et un filet présentant un pas à gauche, le filet à pas à droite de la tige étant situé dans une première section axiale (S1) du mécanisme et le filet à pas à gauche de la tige étant situé dans une seconde section axiale (S2) du mécanisme, la seconde section axiale étant axialement distante de la première section axiale, **caractérisé en ce que** dans la première section axiale, les filets (122a) à pas à gauche des rouleaux s'engrènent dans le filet (112a) à pas à droite de la tige et dans le filet (132a) à pas à gauche de la bague extérieure, et **en ce que**, dans la seconde section axiale, les filets (122b) à pas à droite des rouleaux (120) s'engrènent dans le filet (112b) à pas à gauche de la tige (110) et dans le filet (132b) à pas à droite de la bague extérieure (130).

2. Le mécanisme de roulement selon la revendication 1, **caractérisé en ce que** le filet (112a) à pas à droite de la tige, les filets (122a) à pas à gauche des rouleaux et le filet (132a) à pas à gauche de la bague extérieure présentent des angles d'hélice égaux ou sensiblement égaux entre eux ; et **en ce que** le filet (110b) à pas à gauche de la tige, les filets (122b) à pas à droite des rouleaux et le filet (132b) à pas à droite de la bague extérieure présentent des angles d'hélice égaux ou sensiblement égaux entre eux, de manière à constituer une vis différentielle à pas zéro.

3. Le mécanisme de roulement selon l'une des revendications 1 ou 2, **caractérisé en ce que** le filet (112a) à pas à droite de la tige, les filets (122a) à pas à gauche des rouleaux et le filet (132a) à pas à gauche de la bague extérieure ont un premier nombre de multiplicité, et **en ce que** le filet (112b) à pas à gauche de la tige, les filets (122b) à pas à droite des rouleaux et le filet (132b) à pas à droite de la bague extérieure ont un second nombre de multiplicité qui est différent du premier nombre de multiplicité, de sorte que le mécanisme de roulement présente des capacités de charge différenciées entre deux directions de chargement axial du mécanisme.

4. Le mécanisme de roulement selon l'une quelconque des revendications 1 à 3, **caractérisé en ce que** la tige (110) comprend le filet (112a) à pas à droite sur une première longueur axiale (L1) le long de la tige, les rouleaux (120) comprennent les filets (122a) à pas à gauche sur la première longueur le long des rouleaux, et la bague extérieure (130) comprend le filet (132a) à pas à gauche sur la première longueur le long de la bague extérieure ; et la tige (110) comprend le filet (112b) à pas à gauche sur une seconde longueur axiale (L2) le long de la tige, les rouleaux (120) comprennent les filets (122b) à pas à droite sur la seconde longueur le long des rouleaux, et la bague extérieure (130) comprend le filet (132a) à pas à droite sur la seconde longueur le long de la bague extérieure; la seconde longueur axiale étant différente de la première longueur axiale, de sorte que le mécanisme de roulement présente des capacités de charge différenciées entre deux directions de chargement axial du mécanisme.

5. Le mécanisme de roulement selon l'une quelconque des revendications 1 à 4, **caractérisé en ce que** les rouleaux et la tige sont monoblocs.

6. Le mécanisme de roulement selon l'une quelconque des revendications 1 à 5, **caractérisé en ce que** la bague extérieure (130) est constituée de deux parties (130', 130"), l'une comprenant le filet (132a) à pas à gauche et l'autre comprenant le filet (132b) à pas à droite.

7. Le mécanisme de roulement selon l'une quelconque des revendications 1 à 6, **caractérisé en ce que** les rouleaux sont creux.

8. Dispositif de vérin mécanique (700 ; 800) pour déplacement linéaire par vis d'entraînement comprenant le mécanisme de roulement (100) selon l'une quelconque des revendications 1 à 7 et une vis d'entraînement (710), tous deux montés suivant un axe commun (720 ; 110) au mécanisme de roulement et à la vis d'entraînement, le mécanisme de roulement étant configuré de manière à former un palier de guidage de l'axe commun.

9. Dispositif de vérin mécanique selon la revendication 8 pour déplacement linéaire par vis d'entraînement (710), comprenant une autre tige (720) sur laquelle est montée ladite vis d'entraînement, **caractérisé en ce que** le mécanisme de roulement (100) selon l'une quelconque des revendications 1 à 7 est monté sur ladite autre tige (720), ladite autre tige constituant ledit axe commun et faisant partie intégrante de la vis d'entraînement.

10. Dispositif de vérin mécanique selon la revendication 8 pour déplacement linéaire par vis d'entraînement (710), **caractérisé en ce que** la vis d'entraînement (710) est montée directement sur la tige (110) du mécanisme de roulement (100), ladite tige constituant ledit axe commun et faisant partie intégrante de la vis à d'entraînement.

## Patentansprüche

1. Lagermechanismus, umfassend:
- eine Stange (110);
- einen Außenring (130), der die Stange (110) koaxial umgibt; und
- Rollen (120) mit Längsachsen parallel zu den Längsachsen der Stange und des Außenrings,
wobei jede Walze (120) zwischen der Stange (110) und dem Außenring (130) zwischengefügt ist, so dass die Netze der Rollen in ein Netz der Stange und ein Netz des Außenrings eingreifen, wobei die Stange, der Außenring und die Rollen jeweils ein Netz, das ein Rechtsgewinde aufweist, und ein Netz, das ein Linksgewinde aufweist, umfassen, wobei das Netz mit Rechtsgewinde der Stange in einem ersten Axialabschnitt (S1) des Mechanismus angeordnet ist, und das Netz mit Linksgewinde der Stange in einem zweiten Axialabschnitt (S2) des Mechanismus angeordnet ist, wobei der zweite Axialabschnitt axial vom ersten Axialabschnitt entfernt ist, **dadurch gekennzeichnet, dass** im ersten Axialabschnitt die Netze (122a) mit Linksgewinde der Rollen in das Netz (112a) mit Rechtsgewinde der Stange und in das Netz (132a) mit Linksgewinde des Außenrings eingreifen, und dass im zweiten Axialabschnitt die Netze (122b) mit Rechtsgewinde der Rollen (120) in das Netz (112b) mit Linksgewinde der Stange (110) und in das Netz (132b) mit Rechtsgewinde des Außenrings (130) eingreifen.

2. Lagermechanismus nach Anspruch 1, **dadurch gekennzeichnet, dass** das Netz (112a) mit Rechtsgewinde der Stange, die Netze (122a) mit Linksgewinde der Rollen und das Netz (132a) mit Linksgewinde des Außenrings gleiche oder im Wesentlichen zueinander gleiche Steigungswinkel aufweisen; und dass das Netz (110b) mit Linksgewinde der Stange, die Netze (122b) mit Rechtsgewinde der Rollen und das Netz (132b) mit Rechtsgewinde des Außenrings gleiche oder im Wesentlichen zueinander gleiche Steigungswinkel aufweisen, um eine Differentialschraube mit Nullsteigung darzustellen.

3. Lagermechanismus nach einem der Ansprüche 1 oder 2, **dadurch gekennzeichnet, dass** das Netz (112a) mit Rechtsgewinde der Stange, die Netze (122a) mit Linksgewinde der Rollen und das Netz (132a) mit Linksgewinde des Außenrings eine erste Multiplizitätszahl haben, und dass das Netz (112b) mit Linksgewinde der Stange, die Netze (122b) mit Rechtsgewinde der Rollen und das Netz (132b) mit Rechtsgewinde des Außenrings eine zweite Multiplizitätszahl haben, die sich von der ersten Multiplizitätszahl unterscheidet, so dass der Lagermechanismus differenzierte Ladekapazitäten zwischen zwei axialen Laderichtungen des Mechanismus aufweist.

4. Lagermechanismus nach einem der Ansprüche 1 bis 3, **dadurch gekennzeichnet, dass** die Stange (110) das Netz (112a) mit Rechtsgewinde auf einer ersten Axiallänge (L1) entlang der Stange umfasst, die Rollen (120) die Netze (122a) mit Linksgewinde auf der ersten Länge entlang der Rollen umfassen, und der Außenring (130) das Netz (132a) mit Linksgewinde auf der ersten Länge entlang des Außenrings umfasst; und die Stange (110) das Netz (112b) mit Linksgewinde auf einer zweiten Axiallänge (L2) entlang der Stange umfasst, die Rollen (120) die Netze (122b) mit Rechtsgewinde auf der zweiten Länge entlang der Rollen umfassen, und der Außenring (130) das Netz (132a) mit Rechtsgewinde auf der zweiten Länge entlang des Außenrings umfasst; wobei die zweite Axiallänge zur ersten Axiallänge unterschiedlich ist, so dass der Lagermechanismus differenzierte Ladekapazitäten zwischen zwei axialen Laderichtungen des Mechanismus aufweist.

5. Lagermechanismus nach einem der Ansprüche 1 bis 4, **dadurch gekennzeichnet, dass** die Rollen und die Stange einstückig sind.

6. Lagermechanismus nach einem der Ansprüche 1 bis 5, **dadurch gekennzeichnet, dass** der Außenring (130) von zwei Teilen (130', 130") gebildet ist, wobei der eine das Netz (132a) mit Linksgewinde und der andere das Netz mit Rechtsgewinde (132b) umfasst.

7. Lagermechanismus nach einem der Ansprüche 1 bis 6, **dadurch gekennzeichnet, dass** die Rollen hohl sind.

8. Mechanische Zylindervorrichtung (700; 800) zur linearen Verlagerung durch eine Antriebsspindel, umfassend den Lagermechanismus (100) nach einem der Ansprüche 1 bis 7 und eine Antriebsspindel (710), die beide entlang einer gemeinsamen Achse (720; 110) am Lagermechanismus und an der Antriebsspindel montiert sind, wobei der Lagermechanismus eingerichtet ist, um ein Führungslager der gemeinsamen Achse zu bilden.

9. Mechanische Zylindervorrichtung nach Anspruch 8 zur linearen Verlagerung durch eine Antriebsspindel (710), umfassend eine weitere Stange (720), auf der die Antriebsspindel montiert ist, **dadurch gekennzeichnet, dass** der Lagermechanismus (100) nach einem der Ansprüche 1 bis 7 auf der weiteren Stange (720) montiert ist, wobei die weitere Stange die gemeinsame Achse darstellt und Bestandteil der Antriebsspindel ist.

10. Mechanische Zylindervorrichtung nach Anspruch 8 zur linearen Verlagerung durch eine Antriebsspindel (710), **dadurch gekennzeichnet, dass** die Antriebsspindel (710) direkt auf der Stange (110) des Lagermechanismus (100) montiert ist, wobei die Stange die gemeinsame Achse bildet und Bestandteil der Antriebsspindel ist.

## Claims

1. A rolling bearing mechanism comprising:
- a rod (110);
- an outer ring (130) surrounding the rod (110) coaxially; and
- rollers (120) having longitudinal axes parallel to the longitudinal axes of the rod and of the outer ring, each roller (120) being interposed between the rod (110) and the outer ring (130) so that threads on the rollers mesh with a thread on the rod and with a thread in the outer ring, the rod, the outer ring, and the rollers each having a respective right-handed thread and a respective left-handed thread, the right-handed thread of the rod being situated in a first axial segment (S1) of the mechanism, and the left-handed thread being situated in a second axial segment (S2) of the mechanism, the second axial segment being axially distant from the first axial segment, **characterized in that**, in the first axial segment, the left-handed threads (122a) of the rollers mesh with the right-handed thread (112a) of the rod and with the left-handed thread (132a) of the outer ring, and **in that**, in the second axial segment, the right-handed threads (122b) of the rollers (120) mesh with the left-handed thread (112b) of the rod (110) and with the right-handed thread (132b) of the outer ring (130).

2. The rolling bearing mechanism according to claim 1, **characterized in that** the right-handed thread (112a) of the rod, the left-handed threads (122a) of the rollers, and the left-handed thread (132a) of the outer ring have helix angles that are mutually equal or substantially mutually equal; and **in that** the left-handed thread (110b) of the rod, the right-handed threads (122b) of the rollers, and the right-handed thread (132b) of the outer ring have helix angles that are mutually equal or substantially mutually equal, in such a manner as to constitute a differential screw having zero pitch.

3. The rolling bearing mechanism according to claim 1 or claim 2, **characterized in that** the right-handed thread (112a) of the rod, the left-handed threads (122a) of the rollers, and the left-handed thread (132a) of the outer ring have a first multiplicity number, and **in that** the left-handed thread (112b) of the rod, the right-handed threads of the rollers, and the right-handed thread (132b) of the outer ring have a second multiplicity number that is different from the first multiplicity number, so that the rolling bearing mechanism has load capacities that differ between two directions of axial loading of the mechanism.

4. The rolling bearing mechanism according to any one of claims 1 to 3, **characterized in that** the rod (110) has the right-handed thread (112a) over a first axial length (L1) along the rod, the rollers (120) have the left-handed threads (122a) over the first length along the rollers, and the outer ring (130) has the left-handed thread over the first length along the outer ring; and the rod (100) has the left-handed thread (112b) over a second axial length (L2) along the rod, the rollers (120) have the right-handed threads (122b) over the second length along the rollers, and the outer ring (130) has the right-handed thread (132a) over the second length along the outer ring; the second axial length being different from the first axial length, so that the rolling bearing mechanism has load capacities that differ between two directions of axial loading of the mechanism.

5. The rolling bearing mechanism according to any one of claims 1 to 4, **characterized in that** each of the rollers is made integrally in one piece and the rod is made integrally in one piece.

6. The rolling bearing mechanism according to any one of claims 1 to 5, **characterized in that** the outer ring (130) is made up of two pieces (130', 130"), one of which pieces has the left-handed thread (132a) and the other of which pieces has the right-handed thread (132b).

7. The rolling bearing mechanism according to any one of claims 1 to 6, **characterized in that** the rollers are hollow.

8. A mechanical actuator device (700; 800) for generating linear movement driven by a drive screw, which mechanical actuator device includes the rolling bearing mechanism (100) according to any one of claims 1 to 7, and a drive screw (710), both of which are mounted on a shaft or shank (720; 110) that is common to the rolling bearing mechanism and to the drive screw, the rolling bearing mechanism being configured in such a manner as to form a bearing for guiding the common shaft or shank.

9. A mechanical actuator device according to claim 8 for generating linear movement driven by a drive screw (710), which mechanical actuator device further includes another rod (720) on which said drive screw is mounted, said mechanical actuator device being **characterized in that** the rolling bearing mechanism (100) according to any one of claims 1 to 7 is mounted on said other rod (720), said other rod constituting said common shaft or shank and being an integral part of the drive screw.

10. A mechanical actuator device according to claim 8 for generating linear movement driven by a drive screw (710), said mechanical actuator device being **characterized in that** the drive screw (710) is mounted directly on the rod (110) of the rolling bearing mechanism (100), said rod constituting said common shaft or shank and being an integral part of the drive screw.
